# FASCICULE DE BREVET EUROPEEN

(11) **EP 2 246 602 B1**
(45) Date de publication et mention de la délivrance du brevet: **02.11.2011**
(21) Numéro de dépôt: 10161194.5
(22) Date de dépôt: 27.04.2010
(51) Int. Cl.: F16K 99/00

(54) **Vanne microfluidique à usage unique**
Mikroventil zum einmaligen Gebrauch
Single use microvalve

(30) Priorité: 30.04.2009 FR 0952859
(43) Date de publication de la demande: 03.11.2010
(73) Titulaire: Commissariat à l'Énergie Atomique et aux Énergies Alternatives, 75015 Paris (FR); Université Joseph Fourier, 38041 Grenoble Cedex 09 (FR)
(72) Inventeur: Allain, Marjolaine, 38420 Domène (FR); Basrour, Skandar, 38100 Grenoble (FR); Berthier, Jean, 38240 Meylan (FR); Pouteau, Patrick, 38240 Meylan (FR)
(74) Mandataire: Augarde, Eric

(56) Documents cités:
- WO-A-2007/120640
- US-A- 6 114 658
- US-A1- 2004 024 382

## Description

### DOMAINE TECHNIQUE

La présente invention se rapporte au domaine général de la microfluidique, et concerne une vanne microfluidique à usage unique pour la microfluidique dite « continue ». La microfluidique « continue » concerne l'écoulement d'un fluide en phase continue, et s'oppose à la microfluidique « discrète » dans laquelle des gouttes sont manipulées et déplacées.

L'invention s'applique à tout dispositif microfluidique permettant l'écoulement d'un fluide dans un microcanal en vue d'analyses biochimiques, chimiques ou biologiques, que ce soit dans le domaine médical, ou dans la surveillance environnementale, ou dans le domaine du contrôle de qualité.

### ETAT DE LA TECHNIQUE ANTERIEURE

Les vannes microfluidiques, ou microvannes, permettent de bloquer ou d'autoriser l'écoulement d'un fluide dans un microcanal et sont fréquemment utilisées dans les dispositifs microfluidiques.

Par exemple, des microvannes peuvent être présentes dans les laboratoires sur puce ou les systèmes d'injection de substances médicales.

L'ouverture et la fermeture des microvannes peuvent être réalisées de différentes manières, par exemple, à l'aide d'actionneur piézoélectrique, électrostatique, thermopneumatique, voire électromagnétique. L'article de Laser et Santiago intitulé « A review of micropumps », J. Micromech. Microeng., 14 (2004), R35-R64, présente des exemples de microvannes utilisées dans les micropompes.

Certaines microvannes peuvent être à usage unique, c'est-à-dire qu'elles sont conçues pour passer une seule fois de la configuration fermée à la configuration ouverte. Une fois ouverte, ces microvannes restent définitivement dans cette configuration.

La demande internationale WO 2007/120640 décrit un exemple de microvanne à usage unique utilisée pour obturer le microcanal d'un dispositif microfluidique.

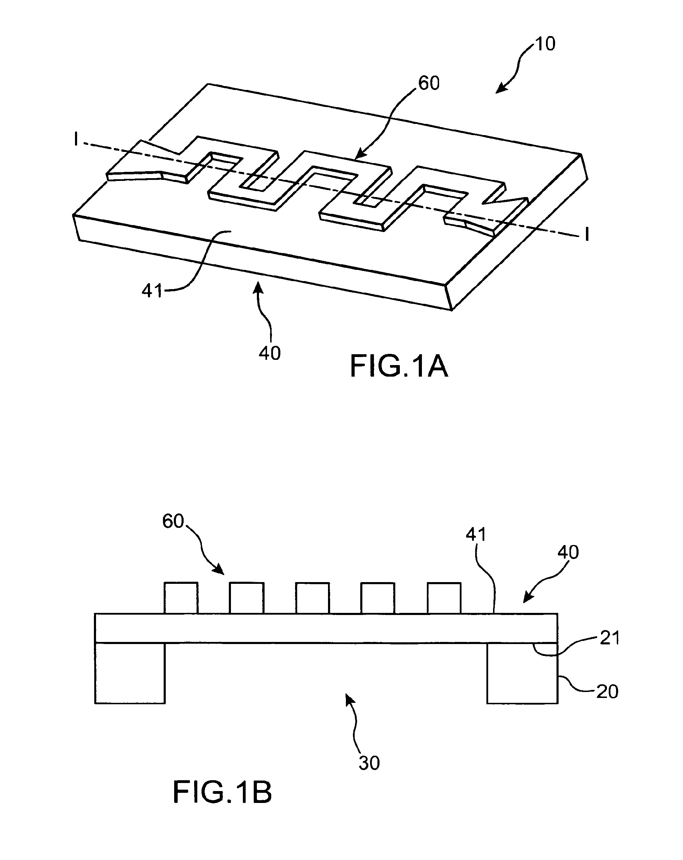

La microvanne est en partie illustrée sur les figures 1A et 1B. La figure 1A est une vue de dessus et en perspective d'une membrane sur laquelle s'étend une piste électrique. La figure 1B est une vue en coupe suivant l'axe I-I de la membrane représentée sur la figure 1A.

La microvanne 10 comprend un substrat 20 dans lequel un microcanal 30 est formé qui débouche sur la surface supérieure 21 dudit substrat 20.

Une membrane 40 déformable thermiquement est déposée sur la surface supérieure 21 dudit substrat 20 et obture une extrémité dudit microcanal 30.

Une piste électrique 60 est fixée directement à la surface 41 de la membrane 40 opposée au microcanal 30, et s'étend, par exemple, sous forme de zig-zag.

Les bornes de la piste électrique sont connectées à un générateur de tension (non représenté).

Lorsque le générateur de tension est activé, un courant électrique parcourt la piste électrique 60. Cela provoque une augmentation de température de la piste électrique 60 et s'accompagne d'un dégagement de chaleur par effet Joule.

Une partie de la chaleur est transmise par conduction de la piste électrique 60 à la membrane 40, ce qui entraîne une augmentation locale de la température de la membrane.

La membrane 40 présente alors un champ de température inhomogène dont la valeur maximale est localisée au niveau de la surface de contact entre la membrane 40 et la piste électrique 60.

La température décroît à mesure que l'on s'éloigne de cette surface de contact, notamment suivant la dimension d'épaisseur de la membrane.

La dilatation de la membrane 40 est directement corrélée au champ de température induit. Des contraintes mécaniques, essentiellement de cisaillement, sont alors générées qui provoquent la rupture de la membrane.

L'ouverture de la microvanne 10 est alors obtenue, ce qui autorise l'écoulement d'un fluide dans le microcanal 30.

Cette microvanne présente cependant un certain nombre d'inconvénients.

L'ouverture de la microvanne ne peut être obtenue de manière reproductible. La table 4 de la demande internationale citée précédemment illustre ce problème. Selon ce tableau, dans le cas d'une piste électrique réalisée en or, la rupture de la membrane n'est pas obtenue systématiquement, malgré l'importance de l'énergie électrique fournie, de l'ordre de quelques centaines de millijoules.

La raison peut être que l'intensité des contraintes mécaniques générées n'a pas été suffisante. Une solution peut alors consister à augmenter l'énergie électrique fournie à la piste électrique. Cependant, d'autres problèmes peuvent alors apparaître, comme la fusion de la piste électrique avant la rupture de la membrane.

L'énergie électrique nécessaire reste cependant importante. Elle est également de l'ordre de quelques centaines de millijoules dans le cas d'une piste électrique en platine, comme le montre la même table 4 de la demande internationale citée précédemment.

Par ailleurs, un risque de décollement de la piste électrique de la surface de la membrane est présent. En effet, la piste électrique et la membrane sont réalisées dans des matériaux différents, et présentent des coefficients de dilatation thermique sensiblement différents. Aussi, la différence de dilatation entre ces deux matériaux induit, au niveau de ladite surface de contact, des contraintes en cisaillement particulièrement élevées. Ces contraintes peuvent fragiliser la fixation par adhérence de la piste électrique sur la membrane, et peuvent provoquer le décollement global ou partiel de la piste électrique de la surface de la membrane. Le décollement, lorsqu'il a lieu avant la rupture de la membrane, rend la microvanne inopérante.

### EXPOSÉ DE L'INVENTION

L'invention a principalement pour but de présenter une vanne microfluidique pour dispositif microfluidique permettant de remédier au moins en partie aux inconvénients mentionnés ci-dessus relatifs à la réalisation de l'art antérieur en référence aux figures 1A et 1B.

Pour ce faire, l'invention a pour objet une vanne microfluidique comprenant un microcanal, une membrane disposée de manière à obturer ledit microcanal et équipée de moyens résistifs.

Selon l'invention, au moins une face de ladite membrane comprend au moins une rainure, lesdits moyens résistifs étant disposés dans ladite rainure et sont aptes à, lorsqu'ils sont traversés par un courant électrique de commande, se dilater suffisamment sous l'effet de la chaleur produite par le passage dudit courant électrique pour provoquer la rupture d'au moins une partie de ladite membrane.

Ainsi, à la différence de la vanne microfluidique selon la réalisation de l'art antérieur citée précédemment, une rainure est formée sur l'une des faces de la membrane. Cette rainure entraîne une modification géométrique locale de la membrane.

De plus, les moyens résistifs n'ont pas pour seule fonction de chauffer sous l'effet d'un courant électrique les parcourant, mais également et surtout de se dilater suffisamment.

En se dilatant, les moyens résistifs exercent des efforts sur une partie de la surface de la rainure qui génèrent ainsi des contraintes mécaniques dans la membrane.

Du fait de la modification géométrique locale de la membrane au niveau de la rainure, les contraintes mécaniques ont tendance à se concentrer naturellement dans la zone de la rainure. La rainure forme ainsi une zone prédéterminée de fragilité, propice à la rupture.

La rupture de la membrane est alors obtenue pour des contraintes d'intensité plus faible que dans la réalisation de l'art antérieur cité précédemment. Par ailleurs, le lieu de la rupture de la membrane est contrôlé et correspond sensiblement à la zone de la rainure.

L'énergie électrique à fournir est également moins importante. Les risques de fusion du matériau des moyens résistifs et de décollement desdits moyens résistifs sont ainsi diminués voire évités.

Avantageusement, ladite rainure comprend deux faces latérales et sensiblement opposées l'une à l'autre, délimitant une largeur de rainure et reliées entre elles par une face inférieure, lesdits moyens résistifs étant en contact au moins partiel avec lesdites faces latérales et ladite face inférieure.

Les moyens résistifs, lorsqu'ils se dilatent, exercent des efforts mécaniques, notamment des efforts tangentiels sur la face inférieure et des efforts normaux sur les faces latérales. Des contraintes en cisaillement et en compression sont alors générées dans la membrane. Comme expliqué précédemment, ces contraintes mécaniques ont tendance à se concentrer dans la zone de la rainure et provoquent la rupture de la membrane.

De plus, le fait que les moyens résistifs soient en contact avec les faces latérales, et donc « confinés » entre celles-ci, contribue à éviter le phénomène de décollement.

Selon le mode de réalisation préféré de l'invention, la vanne microfluidique comporte des moyens de génération d'un courant électrique de commande connectés auxdits moyens résistifs. Ces moyens de génération peuvent être un générateur de tension connectés aux moyens résistifs par des fils électriques et des plots de connexion.

Alternativement, lesdits moyens de génération de courant électrique sont des moyens de génération par induction électromagnétique et comprennent une bobine connectée auxdits moyens résistifs. La bobine peut comporter une seule ou plusieurs spires dont la taille est comprise entre quelques micromètres et quelques millimètres. La bobine est soumise à un champ magnétique ou électromagnétique pulsé pendant la durée nécessaire à l'ouverture de la vanne microfluidique.

Avantageusement, lesdits moyens résistifs sont réalisés dans un matériau présentant un premier coefficient de dilatation thermique et en ce que ladite membrane est réalisée dans un matériau présentant un second coefficient de dilatation thermique sensiblement inférieur audit premier coefficient de dilatation thermique.

De préférence, ladite rainure présente une profondeur moyenne comprise entre 0,2 et 0,8 fois l'épaisseur moyenne de ladite membrane.

De préférence, lesdits moyens résistifs sont réalisés dans un matériau choisi parmi l'or, le platine, l'aluminium, le manganèse, le zinc, le nickel, l'inconel 600, le chrome, le cuivre et le polysilicium.

De préférence, ladite membrane est réalisée dans un matériau choisi parmi le Si₃N₄, le SiO₂, et le SiN.

Ladite face de la membrane comprenant ladite rainure est, de préférence, opposée audit microcanal. Ainsi, dans le cas où le microcanal est rempli d'un fluide conducteur, tout phénomène de court-circuit est évité.

L'invention porte également sur un dispositif microfluidique comprenant une vanne microfluidique selon l'une quelconque des caractéristiques précédentes, un réservoir de fluide étant relié audit microcanal.

Par ailleurs, un second microcanal, ou une cavité ou chambre, peut être relié audit microcanal et séparé de celui-ci par ladite membrane.

Le premier microcanal peut être rempli d'un fluide, éventuellement sous pression. Le second microcanal peut être sous vide. Ainsi, lors de l'ouverture de la vanne microfluidique par rupture de la membrane, le fluide s'écoule dans le second microcanal sous l'effet de la différence de pression.

L'invention porte également sur un procédé d'ouverture d'une vanne microfluidique selon l'une quelconque des caractéristiques précédentes, dans lequel on fournit auxdits moyens résistifs une énergie électrique sensiblement inférieure à 10⁻⁴ J.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La figure 1A, déjà décrite, est une vue de dessus et en perspective d'une partie d'une vanne microfluidique selon une réalisation de l'art antérieur comprenant une membrane sur laquelle s'étend une piste électrique ;
La figure 1B, déjà décrite, est une vue en coupe transversale suivant l'axe I-I de la partie de vanne microfluidique représentée sur la figure 1A ;
La figure 2 est une vue en coupe transversale d'une partie de vanne microfluidique selon le mode de réalisation préféré de l'invention ;
La figure 3 est une vue agrandie d'une rainure telle que représentée en coupe transversale sur la figure 2 ; et
Les figures 4A à 4C sont des vues de dessus de la membrane de la vanne microfluidique selon l'invention sur laquelle sont déposés des moyens résistifs, qui diffèrent entre elles par le motif formé par les moyens résistifs à la surface de la membrane.

### EXPOSÉ DÉTAILLÉ D'UN MODE DE RÉALISATION PREFERE

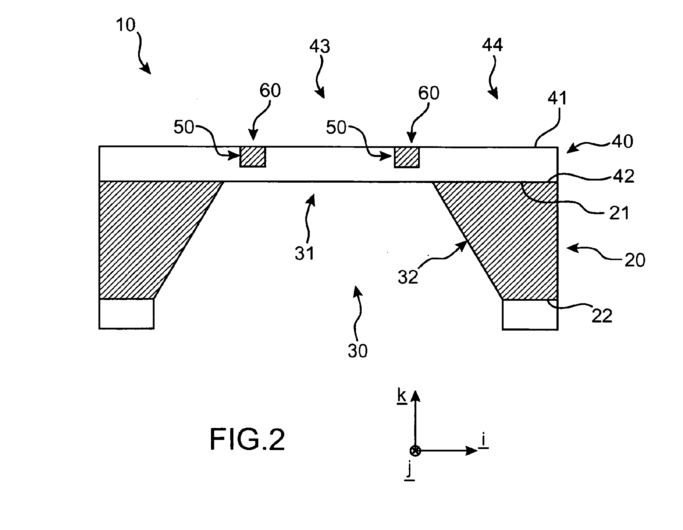

La figure 2 illustre, en coupe transversale, une vanne microfluidique 10 selon le mode de réalisation préféré de l'invention.

I1 est à noter que les échelles ne sont pas respectées, pour privilégier la clarté du dessin.

Dans toute la description qui va suivre, on utilise un repère orthonormé (i,j,k), représenté notamment sur la figure 2.

La vanne microfluidique 10 comprend un substrat 20 dans lequel est formé un microcanal 30 traversant.

Le microcanal 30 est débouchant sur une face supérieure 21 du substrat 20.

Les termes « inférieur » et « supérieur » sont ici à comprendre en termes d'orientation suivant la direction k du repère orthonormé (i,j,k) représenté sur la figure 2.

La vanne microfluidique 10 comprend une membrane 40 disposée sur la face supérieure 21 du substrat 20 de manière à obturer le microcanal 30.

Par membrane, on entend une couche mince.

L'épaisseur moyenne de la membrane 40, mesurée suivant la direction k, est sensiblement inférieure aux dimensions de la surface de la membrane qui s'étend dans un plan sensiblement parallèle au plan (i,j).

La membrane 40 est solidaire du substrat 20. Plus précisément, la membrane présente une face inférieure 42 dont une partie est fixée à la face supérieure 21 du substrat 20.

Aussi, la membrane 40 présente une partie centrale 43 située en regard du microcanal 30 de manière à obturer celui-ci, et une partie périphérique 44 dont la face inférieure 42 est fixée au substrat 20.

La membrane 40 est sensiblement rigide, mais peut également être souple ou flexible.

La membrane 40 peut être réalisée dans un matériau présentant un module d'Young E élevé, par exemple de l'ordre de quelques dizaines à quelques centaines de gigapascal. Aussi, une petite déformation de la membrane engendre des contraintes mécaniques d'intensité élevée.

Par ailleurs, le régime de déformation du matériau de la membrane peut ne pas comporter de domaine plastique mais essentiellement un domaine élastique. Le matériau est alors dit fragile, par opposition aux matériaux ductiles. Aussi, la rupture de la membrane peut être obtenue pour de petites déformations, dans le domaine élastique.

Dans le mode de réalisation préféré de l'invention, la face supérieure 41 de la membrane 40 comporte une rainure 50.

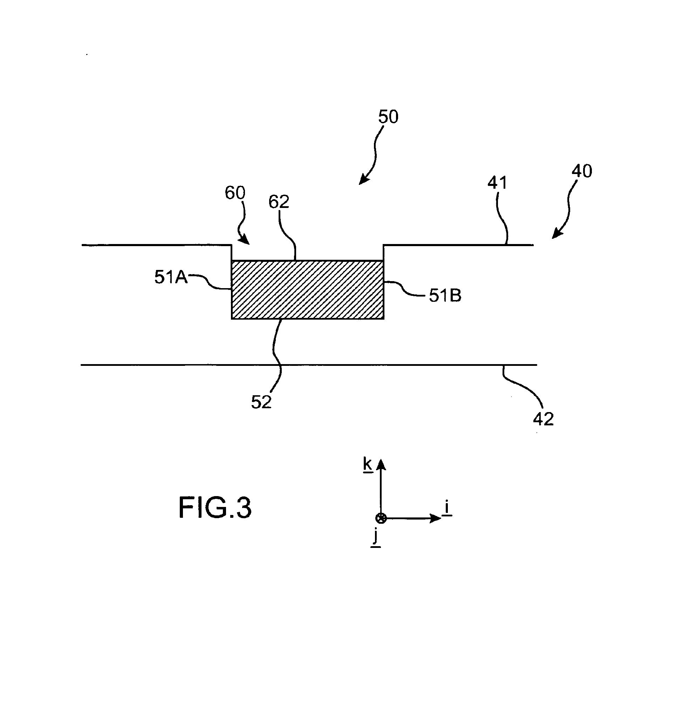

La figure 3 est une vue agrandie d'une rainure représentée en coupe transversale sur la figure 2.

Par rainure, on entend une entaille non traversante, ou échancrure, longue et étroite.

La rainure 50 est délimitée par deux faces sensiblement latérales 51A, 51B reliées entre elles par une face inférieure 52.

La distance moyenne entre les deux faces latérales 51A, 51B de la rainure 50 définit la largeur de la rainure.

La profondeur de la rainure est définie par la distance moyenne entre la face inférieure 52 de la rainure et le plan dans lequel est sensiblement contenue la face supérieure 41 de la membrane 40.

Le profil transversal de la rainure 50 présente alors une forme sensiblement en U.

La rainure 50 est au moins en partie disposée en regard du microcanal 30, donc localisée dans la partie centrale 43 de la membrane 40.

Ainsi, la rainure 50 entraîne une modification géométrique locale de la membrane 40, et correspond alors à une zone de concentration des contraintes mécaniques.

Des moyens résistifs 60 sont disposés dans la rainure 50, de préférence sur toute la longueur de celle-ci.

Ces moyens résistifs 60 comprennent une piste 60, ou couche étroite, d'un matériau électriquement conducteur, de préférence métallique.

Le matériau de la piste électrique 60 présente un coefficient de dilatation thermique élevé. Aussi, il peut se dilater lorsque la piste électrique 60 est chauffée par la présence d'un courant électrique. Dans le mode de réalisation préféré de l'invention, le coefficient de dilatation thermique du matériau de la piste électrique est sensiblement supérieur à celui du matériau de la membrane.

La piste électrique 60 remplit au moins partiellement l'épaisseur de la rainure 50 à partir de la face inférieure 52 de celle-ci. Elle est également en contact au moins partiel avec les faces latérales 51A, 51B.

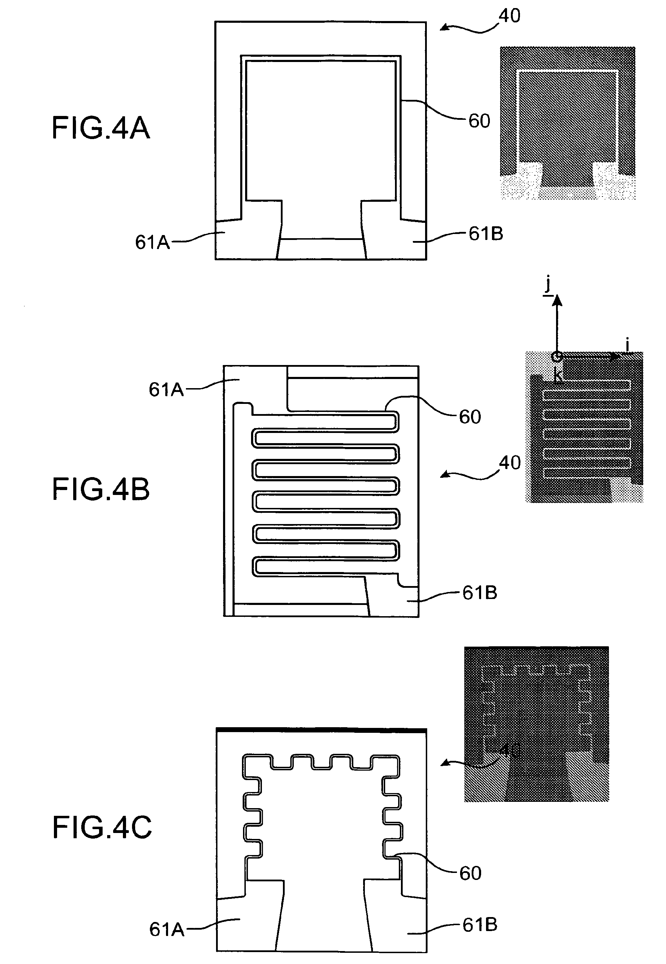

La figure 4A est une vue de dessus de la membrane 40 sur laquelle s'étend la piste électrique 60. La piste électrique 60 présente un motif suivant le plan (i,j) en forme de U sensiblement carré. D'autres motifs sont possibles, comme par exemple le motif en serpentin illustré sur la figure 4B et le motif en U cannelé représenté sur la figure 4C.

Les extrémités, ou bornes, de la piste électrique 60 sont connectées chacune à un plot de connexion électrique 61A, 61B.

La vanne microfluidique 10 comprend également ou est reliée à un générateur de tension (non représenté sur les figures) connecté auxdits plots de connexion 61A, 61B. Le générateur permet d'appliquer une différence de potentiel aux bornes de la piste électrique 60.

Le fonctionnement de la vanne microfluidique 10 selon le mode de réalisation préféré de l'invention est maintenant décrit en détail.

Lorsque le générateur de tension est activé, une différence de potentiel est appliquée aux bornes de la piste électrique 60.

La différence de potentiel, de l'ordre de quelques volts, par exemple 3V, est appliquée pendant une durée de l'ordre de quelques dizaines à quelques centaines de microsecondes, par exemple 100µs. Le courant électrique est de l'ordre de quelques dizaines de milliampères, par exemple 50mA. Aussi, l'énergie électrique fournie à la piste électrique est alors de l'ordre de 0,015mJ, ce qui correspond à une puissance électrique de l'ordre de 150mW.

Le courant électrique parcourt alors la piste électrique 60, et entraîne une augmentation de la température de celle-ci.

La piste électrique 60 se dilate proportionnellement à l'augmentation de température. Le taux de dilatation est fonction du coefficient de dilatation thermique du matériau de la piste électrique.

Du fait de la dilatation de la piste électrique 60, des efforts sont appliqués à la membrane 40, plus précisément aux faces de la rainure 50, et génèrent des contraintes mécaniques à l'intérieur de la membrane 40.

Plus précisément, la dilatation de la piste électrique 60 dans le sens de la largeur de celle-ci génère des efforts tangentiels sur la face inférieure 52 de la rainure 50 qui engendrent des contraintes de cisaillement dans la membrane 40, et des efforts normaux sur les faces latérales 51A, 51B de la rainure 50 qui engendrent des contraintes de compression.

Par ailleurs, la piste électrique 60 émet également de la chaleur par effet Joule. Une partie de la chaleur émise est transmise par conduction à la membrane 40, au travers des faces latérales 51A, 51B et inférieure 52 de la rainure 50. Une partie de la chaleur émise, principalement celle émise par la face supérieure 62 de la piste électrique 60, est dissipée par rayonnement et par conduction dans le fluide éventuellement présent du côté de la face supérieure 41 de la membrane 40.

Les contraintes générées par la dilatation de la piste électrique 60 provoquent la rupture de la membrane 40. Celle-ci se produit essentiellement au niveau de la rainure 50, puisqu'elle forme, de part sa géométrie, une zone de concentration des contraintes.

Le positionnement défini de la rainure 50 dans la partie centrale 43 de la membrane 40 permet ainsi de contrôler précisément la zone de rupture de la membrane 40.

Par ailleurs, la chaleur transmise à la membrane 40 par conduction provoque une augmentation de la température de celle-ci, principalement à proximité de la rainure 50. Cette augmentation de température peut provoquer une dilatation de la membrane 40, selon le coefficient de dilatation thermique du matériau de la membrane. Cette dilatation induit des contraintes supplémentaires qui viennent s'ajouter à celles générées par la dilatation de la piste électrique 60. La rupture est alors obtenue plus rapidement, et donc nécessite un moindre coût en termes d'énergie électrique à fournir.

La réalisation de la vanne microfluidique 10 est maintenant décrite.

Le substrat 20 peut être réalisé en silicium. L'épaisseur du substrat 20 dépend de la longueur du microcanal 30 que l'on désire former. Elle peut être de l'ordre de quelques centaines de microns.

Une couche mince 40 de nitrure de silicium, destinée à former la membrane 40, est déposée sur la face supérieure 21 du substrat 20, par exemple par LPCVD (*Low Pressure Chemical Vapor Deposition*)*.*

L'épaisseur de la couche mince 40 est comprise entre 50nm et 1µm, de préférence entre 100nm et 800nm, et de l'ordre de 200nm.

Le matériau de la couche mince 40, du type diélectrique amorphe, peut être, alternativement au nitrure de silicium, du SiN ou du SiO₂.

La rainure 50 est formée sur la face supérieure 41 de la couche mince 40 par photolithographie. Pour cela, une résine photosensible est étalée sur la face supérieure 41 de la couche mince 40 et forme un cache définissant le motif de la rainure 50 à former.

Une étape de gravure plasma RIE permet de former la rainure 50. La rainure 50 peut présenter une largeur de l'ordre de 2µm et une profondeur de l'ordre de 100nm. La rainure 50 peut être plus profonde et être de l'ordre de 0,5 à 0,8 fois l'épaisseur de la membrane 40.

La piste électrique 60, de préférence en or ou en platine, est ensuite déposée par évaporation ou pulvérisation. Cependant, d'autres matériaux peuvent être utilisés, comme de l'aluminium, du manganèse, du zinc, du nickel, de l'inconel 600, du chrome, du cuivre et du polysilicium. Les matériaux privilégiés sont ceux dont le coefficient de dilatation thermique est supérieur à celui du matériau de la membrane. Il est avantageux que la capacité thermique soit faible pour favoriser la production de chaleur au sein de la piste électrique.

Préalablement au dépôt de la piste électrique 60, une fine couche d'un matériau d'accroche est déposée, par exemple d'épaisseur de l'ordre de 10nm. Par exemple, le chrome peut être utilisé pour l'accroche de l'or, et le titane pour le platine.

Le métal déposé sur la résine peut être enlevé par une technique de Lift Off. La résine et le métal excédentaire peuvent ensuite être enlevés par gravure chimique.

Enfin, le microcanal 30 est formé, par exemple, par gravure humide KOH de la face inférieure 22 du substrat 20, ce qui permet d'obtenir la membrane 40. Bien entendu, une couche de protection est préalablement déposée sur la face supérieure 41 de la couche mince 40.

La gravure du substrat 20 pour former le microcanal 30 peut être effectuée en suivant les plans cristallins du substrat 20. Les parois 32 du microcanal 30 sont alors inclinées selon un angle de gravure de l'ordre de 55°.

L'extrémité 31 du microcanal 30 présente une forme sensiblement carrée de largeur comprise entre 10µm et 1mm, de préférence entre 50 et 500µm, de l'ordre de 100µm. La rainure 50 est située, de préférence, à une distance de l'ordre de 10µm de la bordure de l'extrémité 31 du microcanal.

La vanne microfluidique selon l'invention peut être utilisée dans différents types de dispositif microfluidique.

Par exemple, un dispositif microfluidique (non représenté) peut comprendre un réservoir de fluide relié au microcanal, ainsi qu'un second microcanal relié audit premier microcanal et séparé de celui-ci par la membrane.

Le fluide peut remplir le premier microcanal et venir en contact avec la membrane. La face inférieure de la membrane est alors appelée face amont et la face supérieure de la membrane est appelée face aval. Dans le cas où le fluide est un liquide électriquement conducteur, il est avantageux que la piste électrique soit disposée au niveau de la face aval de la membrane, pour éviter les courts-circuits.

Le second microcanal peut être sous vide. Ainsi, lors de l'ouverture de la vanne microfluidique selon l'invention, la différence de pression entre le vide et la pression dans le fluide entraîne l'aspiration du fluide dans le second microcanal.

I1 n'est alors pas nécessaire de disposer de dispositif de pression pour provoquer l'écoulement du fluide dans les microcanaux.

Bien entendu, diverses modifications peuvent être apportées par l'homme du métier à l'invention qui vient d'être décrite, uniquement à titre d'exemples non limitatifs.

Ainsi, suivant une variante de réalisation, la membrane 40 peut être disposée directement à l'intérieur du microcanal 30, sans qu'elle soit disposée sur la face supérieure 21 du substrat 20 selon les caractéristiques du mode de réalisation préféré décrit précédemment. La membrane comporte alors une partie centrale qui s'étend dans le microcanal suivant une direction sensiblement transversale. Une partie périphérique, fixée aux parois du microcanal, est présente pour assurer le maintien de la membrane.

Un dispositif microfluidique tel que décrit précédemment qui comprend une vanne selon la variante de réalisation peut ne pas comprendre de second microcanal. Le microcanal 30 peut alors comprendre une partie amont remplie d'un fluide et une partie aval sous vide. Comme décrit précédemment, la rupture de la membrane provoque l'écoulement du fluide dans la partie aval du microcanal du fait de la différence de pression entre le vide et la pression dans le fluide.

Par ailleurs, le courant électrique dans les moyens résistifs peut être généré directement, comme décrit précédemment, par connexion directe avec un générateur de tension via des plots conducteurs 61a et 61b. Alternativement, il peut être généré à distance, sans aucun raccordement, par induction électromagnétique.

Dans un tel cas, les moyens résistifs sont connectés à une boucle fermée conductrice et soumis à un champ magnétique ou électromagnétique pulsé et activé pendant la durée nécessaire à l'ouverture de la vanne. Ce champ pulsé est fourni par des moyens classiques extérieurs au système. Son intensité est, de préférence, de l'ordre de 0,01 Tesla. La boucle fermée implantée dans le microsystème et connectée aux moyens résistifs peut comprendre une seule ou plusieurs spires (dimensions comprises entre 200 à 2000 µm). Selon la loi de Maxwell-Faraday, le courant induit est proportionnel à la fréquence du champ électromagnétique, à son intensité, à la dimension de la boucle de courant et inversement proportionnel à la résistivité électrique du matériau constituant la (ou les) spire(s).

## Revendications

1. Vanne microfluidique (10) comprenant un microcanal (30), une membrane (40) disposée de manière à obturer ledit microcanal (30) et équipée de moyens résistifs (60),
**caractérisée en ce qu'**au moins une face (41) de ladite membrane (40) comprend au moins une rainure (50),
et **en ce que** lesdits moyens résistifs (60) sont disposés dans ladite rainure (50) et sont aptes à, lorsqu'ils sont traversés par un courant électrique de commande, se dilater suffisamment sous l'effet de la chaleur produite par le passage dudit courant électrique pour provoquer la rupture d'au moins une partie de ladite membrane (40).

2. Vanne microfluidique (10) selon la revendication 1, **caractérisée en ce que**
ladite rainure (50) comprend deux faces latérales (51A, 51B) et sensiblement opposées l'une à l'autre, délimitant une largeur de rainure et reliées entre elles par une face inférieure (52),
lesdits moyens résistifs (60) étant en contact au moins partiel avec lesdites faces latérales (51A, 51B) et ladite face inférieure (52).

3. Vanne microfluidique (10) selon la revendication 1 ou 2, **caractérisée en ce qu'**elle comporte des moyens de génération d'un courant électrique de commande connectés auxdits moyens résistifs (60).

4. Vanne microfluidique (10) selon la revendication 3, **caractérisée en ce que** lesdits moyens de génération de courant électrique sont des moyens de génération par induction électromagnétique et comprennent une bobine connectée auxdits moyens résistifs (60).

5. Vanne microfluidique (10) selon l'une quelconque des revendications 1 à 4, **caractérisée en ce que** lesdits moyens résistifs (60) sont réalisés dans un matériau présentant un premier coefficient de dilatation thermique et **en ce que** ladite membrane (40) est réalisée dans un matériau présentant un second coefficient de dilatation thermique sensiblement inférieur audit premier coefficient de dilatation thermique.

6. Vanne microfluidique (10) selon l'une quelconque des revendications 1 à 5, **caractérisée en ce que** ladite rainure (50) présente une profondeur moyenne comprise entre 0,2 et 0,8 fois l'épaisseur moyenne de ladite membrane (40).

7. Vanne microfluidique (10) selon l'une quelconque des revendications 1 à 6, **caractérisée en ce que** lesdits moyens résistifs (60) sont réalisés dans un matériau choisi parmi l'or, le platine, l'aluminium, le manganèse, le zinc, le nickel, l'inconel 600, le chrome, le cuivre et le polysilicium.

8. Vanne microfluidique (10) selon l'une quelconque des revendications 1 à 7, **caractérisée en ce que** ladite membrane (40) est réalisée dans un matériau choisi parmi le Si₃N₄, le SiO₂, et le SiN.

9. Vanne microfluidique (10) selon l'une quelconque des revendications 1 à 8, **caractérisée en ce que** ladite face (41) de la membrane (40) comprenant ladite rainure (50) est opposée audit microcanal (30).

10. Dispositif microfluidique comprenant une vanne microfluidique (10) selon l'une quelconque des revendications 1 à 9, un réservoir de fluide étant relié audit microcanal (30).

11. Procédé d'ouverture d'une vanne microfluidique (10) selon l'une quelconque des revendications 1 à 9, dans lequel on fournit auxdits moyens résistifs (60) une énergie électrique sensiblement inférieure à 10⁻⁴ J.

## Claims

1. Microfluidic valve (10) comprising a microchannel (30), a membrane (40) arranged so as to seal off said microchannel (30) and equipped with resistive means (60),
**characterised in that** at least one face (41) of said membrane (40) comprises at least one groove (50),
and **in that** said resistive means (60) are arranged in said groove (50) and are capable, when an electric control current flows through them, of expanding sufficiently under the effect of the heat produced by the flow of said electric current to cause the rupture of at least one part of said membrane (40).

2. Microfluidic valve (10) according to claim 1, **characterised in that**
said groove (50) comprises two lateral faces (51A, 51B), substantially opposite to each other, delimiting a width of groove and connected to each other by a lower face (52),
said resistive means (60) being in at least partial contact with said lateral faces (51A, 51B) and said lower face (52).

3. Microfluidic valve (10) according to claim 1 or 2, **characterised in that** it comprises means for generating an electric control current connected to said resistive means (60).

4. Microfluidic valve (10) according to claim 3, **characterised in that** said means for generating electric current are generation means by electromagnetic induction and comprise a coil connected to said resistive means (60).

5. Microfluidic valve (10) according to any of claims 1 to 4, **characterised in that** said resistive means (60) are made of a material having a first coefficient of thermal expansion and **in that** said membrane (40) is made of a material having a second coefficient of thermal expansion substantially less than the first coefficient of thermal expansion.

6. Microfluidic valve (10) according to any of claims 1 to 5, **characterised in that** said groove (50) has an average depth between 0.2 and 0.8 times the average thickness of said membrane (40).

7. Microfluidic valve (10) according to any of claims 1 to 6, **characterised in that** said resistive means (60) are made of a material chosen among gold, platinum, aluminium, manganese, zinc, nickel, inconel 600, chromium, copper and polysilicon.

8. Microfluidic valve (10) according to any of claims 1 to 7, **characterised in that** said membrane (40) is made of a material chosen among Si₃N₄, SiO₂, and SiN.

9. Microfluidic valve (10) according to any of claims 1 to 8, **characterised in that** said face (41) of the membrane (40) comprising said groove (50) is opposite to said microchannel (30).

10. Microfluidic device comprising a microfluidic valve (10) according to any of claims 1 to 9, a reservoir of fluid being connected to said microchannel (30).

11. Method for opening a microfluidic valve (10) according to any of claims 1 to 9, wherein an electrical energy substantially less than 10⁻⁴ J is supplied to said resistive means (60).

## Patentansprüche

1. Mikroventil (10), umfassend einen Mikrokanal (30) und eine den genannten Mikrokanal (30) verschließende und mit resistiven Einrichtungen (60) ausgerüstete Membran (40),
**dadurch gekennzeichnet, dass** wenigstens eine Seite (41) der genannten Membran (40) wenigstens eine Nut (50) aufweist,
und **dadurch**, dass die genannten resistiven Einrichtungen (60) in der genannten Nut (50) sitzen und, wenn sie von einem elektrischen Steuerstrom durchflossen werden, fähig sind, sich unter der Wirkung der durch den Durchfluss des genannten elektrischen Stroms erzeugten Wärme ausreichend auszudehnen, um das Brechen wenigstens eines Teils der genannten Membran (40) zu bewirken.

2. Mikroventil (10) nach Anspruch 1, **dadurch gekennzeichnet, dass**
die genannte Nut (50) zwei im Wesentlichen einander gegenüberstehende seitliche Flächen (51A, 51 B) umfasst, die eine Nutbreite begrenzen und durch eine untere Fläche (52) miteinander verbunden sind,
die genannten resistiven Einrichtungen (60) wenigstens partiell Kontakt haben mit den genannten seitlichen Flächen (51A, 51 B) und der genannten unteren Fläche (52).

3. Mikroventil (10) nach Anspruch 1 oder 2, **dadurch gekennzeichnet, dass** es mit den genannten resistiven Einrichtungen (60) verbundene Einrichtungen zur Erzeugung eines elektrischen Steuerstroms umfasst.

4. Mikroventil (10) nach Anspruch 3, **dadurch gekennzeichnet, dass** die genannten Einrichtungen zur Erzeugung von elektrischem Strom Einrichtungen zur Erzeugung mittels elektromagnetischer Induktion sind und eine mit den genannten resistiven Einrichtungen (60) verbundene Spule umfassen.

5. Mikroventil (10) nach einem der Ansprüche 1 bis 4, **dadurch gekennzeichnet, dass** die genannten resistiven Einrichtungen (60) aus einem Material sind, das einen ersten Wärmeausdehnungskoeffizienten hat, und **dadurch**, dass die genannte Membran (40) aus einem Material ist, das einen zweiten Wärmeausdehnungskoeffizienten, wesentlich niedriger als der erste Wärmeausdehnungskoeffizient, aufweist.

6. Mikroventil (10) nach einem der Ansprüche 1 bis 5, **dadurch gekennzeichnet, dass** die mittlere Tiefe der genannten Nut (50) das 0,2- bis 0,8-fache der mittleren Tiefe der genannten Membran (40) beträgt.

7. Mikroventil (10) nach einem der Ansprüche 1 bis 6, **dadurch gekennzeichnet, dass** die genannten resistiven Einrichtungen (60) aus einem unter Gold, Platin, Aluminium, Mangan, Zink, Nickel, Inconel 600, Chrom, Kupfer und Polysilizium ausgewählten Material sind.

8. Mikroventil (10) nach einem der Ansprüche 1 bis 7, **dadurch gekennzeichnet, dass** die genannte Membran (40) aus einem unter Si₃N₄, SiO₂ und SiN ausgewählten Material ist.

9. Mikroventil (10) nach einem der Ansprüche 1 bis 8, **dadurch gekennzeichnet, dass** die die genannte Nut (50) enthaltende Seite (41) der Membran (40) zum genannten Mikrokanal (30) entgegengesetzt ist.

10. Mikrofluidvorrichtung mit einem Mikroventil (10) nach einem der Ansprüche 1 bis 9, wobei mit dem genannten Mikrokanal (30) ein Fluidspeicher verbunden ist.

11. Verfahren zum Öffnen eines Mikroventils (10) nach einem der Ansprüche 1 bis 9, bei dem man an die genannten resistiven Einrichtungen (60) eine elektrische Energie deutlich unter 10⁻⁴ J liefert.
